# FASCICULE DE BREVET EUROPEEN

(11) **EP 2 519 596 B1**
(45) Date de publication et mention de la délivrance du brevet: **27.07.2016**
(21) Numéro de dépôt: 10810790.5
(22) Date de dépôt: 24.12.2010
(51) Int. Cl.: C09J 5/08

(54) **ASSEMBLAGE DE DEUX SUBSTRATS COLLES PAR UN POLYMERE SOUPLE, PROCEDES DE MONTAGE ET DE DEMONTAGE PAR MIGRATION DE CET ASSEMBLAGE COLLE**
ANORDNUNG VON ZWEI MIT EINEM FLEXIBLEN POLYMER GEBONDETEN SUBSTRATEN, SOWIE MONTAGE- UND ZERLEGUNGSVERFAHREN MITTELS MIGRATION DIESER GEBONDETEN ANORDNUNG
ASSEMBLY OF TWO SUBSTRATES BONDED BY A FLEXIBLE POLYMER, AND METHODS FOR ASSEMBLY AND DISMANTLING BY MEANS OF MIGRATION OF SAID BONDED ASSEMBLY

(30) Priorité: 29.12.2009 FR 0959643
(43) Date de publication de la demande: 07.11.2012
(73) Titulaire: Rescoll, 33600 Pessac (FR)
(72) Inventeur: FOULC, Marie-Pierre, F-33770 Salles (FR); BERGARA, Tomas, F-33000 Bordeaux (FR); OLIVE, Maxime, F-33400 Talence (FR)
(74) Mandataire: Aquinov
(86) Numéro de dépôt international: PCT/FR2010/052917
(87) Numéro de publication internationale: WO 2011/080478

(56) Documents cités:
- FR-A1- 2 929 951

## Description

La présente invention concerne un assemblage de deux substrats collés, ainsi que la composition permettant de coller cet assemblage.

L'invention couvre aussi un procédé de montage de cet assemblage par collage et un procédé de démontage de cet assemblage collé par migration et création d'un décollement interfacial.

Dans l'industrie, il existe de plus en plus d'assemblages réalisés par collage avec des compositions parfaitement adaptées aux conditions nécessaires de résistance mécanique, de résistance aux températures subies et à de ombreux, autres paramètres tant physiques que chimiques.

Les substrats ainsi collés donnent totale satisfaction dans l'assemblage résultant.

Par contre, le problème survient lorsque les substrats ainsi assemblés doivent être désolidarisés, par exemple en vue de changer l'un ou l'autre des substrats assemblés.

Contrairement aux liaisons mécaniques qui autorisent un démontage simple par vis ou rivet pour donner un exemple, il est difficile de démonter les substrats collés sans les endommager.

De plus, dans le cas du collage, si l'on assure un démontage il faut aussi prévoir le remontage d'un substrat nouveau en lieu et place du substrat défectueux. Les surfaces doivent alors être aptes à recevoir cette nouvelle liaison collée.

Les liaisons par collage sont réalisées en préparant les surfaces à lier par collage pour qu'elles présentent un état de surface adapté.

Le joint est disposé sur au moins une des faces, les substrats sont positionnés sous pression et le durcissement de la colle est réalisé par chauffage, par émission de rayonnements ou par un catalyseur associé pour donner des exemples. Le durcissement de la colle peut aussi intervenir sous l'effet de l'humidité ou à température ambiante. Quoi qu'il en soit, les substrats sont ainsi solidarisés.

Si la séparation de cette liaison des deux substrats est mécanique en tentant de ne dégrader qu'un des deux substrats, on constate que dans la plupart des cas, au moins l'un des substrats est dégradé, voire les deux.

De plus, dans le cas où la séparation est réussie, le substrat conservé intact présente un état de surface qui interdit une nouvelle liaison par collage ou engendre pour le moins un travail important de traitement de surface.

Une solution consiste à prévoir une réversibilité contrôlée des liaisons collées avec trois moyens pour mettre en oeuvre cette réversibilité, par voie chimique, physico-chimique ou physique.

La voie chimique utilise des joints avec des bases polymères dont la structure peut être modifiée ou détruite par des actions extérieures telles que la chaleur, les rayonnements ou les champs électromagnétiques.

On peut ainsi disposer d'un polymère comportant une chaîne chimique avec des groupements aptes à former une chaîne par polymérisation sous l'action d'une longueur d'ondes donnée tandis que la séparation est obtenue, le moment venu, par dégradation de cette chaîne sous l'action d'une autre longueur d'ondes déterminée.

Néanmoins, de tels produits présentent des performances d'adhésion relativement faibles et se trouvent être liés à des applications très spécifiques.

On connaît des utilisations dans la fixation de composants électroniques, afin de permettre leur retrait et leur changement rapide mais on comprend aussi que les performances mécaniques requises par exemple sont faibles.

La voie physico-chimique consiste à associer des résines thermoplastiques aux résines thermodurcissables connues pour leurs performances mécaniques. Les thermoplastiques ayant la capacité de perdre une grande partie de leurs propriétés sous l'effet de la chaleur, la liaison par un joint comportant une combinaison d'un thermodurcissable et d'un thermoplastique peut s'avérer démontable par destruction du joint dans sa masse. Dans ce cas, le démontage est possible mais les deux substrats portent généralement une partie de ce joint dégradé et il faut au moins retirer la partie restante du joint sur le substrat à réutiliser.

On peut noter aussi que les performances des thermodurcissables sont affaiblies par la présence du thermoplastique et ceci d'autant plus que les substrats travaillent en température, même en restant éloigné des plages de températures de dégradation.

La voie physique consiste à introduire dans la composition adhésive elle-même, par ailleurs connue pour ses capacités d'adhésivité, des additifs capables, sous une stimulation extérieure, souvent la chaleur, de détruire la cohésion du joint dans sa masse.

Il existe de nombreuses applications qui nécessitent la séparation de deux substrats collés et de plus en plus à des fins de recyclage. En effet, pour permettre le classement des matériaux de nature différente et leur recyclage indépendamment, par exemple une matière composite et un renfort métallique ou bien un vitrage automobile, il est nécessaire de procéder à ce type de séparation. L'art antérieur prévoit ainsi systématiquement pour la séparation de deux substrats collés, la dégradation du joint assurant la liaison dans sa masse. Ceci implique que dans ces cas de figure les surfaces démontées sont souillées par le résidu d'adhésif et nécessitent un traitement ultérieur assez lourd pour permettre une éventuelle réutilisation.

Une illustration d'un tel art antérieur est la demande de brevet WO 00/75254 qui décrit un agencement avec un joint à base de polymère incluant des microcapsules contenant des agents d'expansion de type solvants à bas point d'ébullition qui provoquent, sous l'action de la chaleur directe et en puissance suffisante, une décohésion du joint facilitant ainsi le démontage. Une application particulière est le montage et le retrait de pare-brise de véhicules.

On note que ces microsphères peuvent être utilisées au sein de primaires d'adhésion, dans le cas des vitrages automobiles par exemple. Après activation et expansion des microcapsules au sein du primaire, ce dernier a perdu toute sa cohésion et le désassemblage est possible. Cependant les substrats porteurs du primaire sont souillés et doivent être retraités pour pouvoir être recollés.

Une solution à ces différentes problématiques a été apportée dans la demande de brevet EP-1.814.935 qui décrit un procédé d'assemblage de substrats par collage avec une matrice polymère comprenant un agent migrant, ainsi qu'un procédé de démontage de l'assemblage collé, qui consiste à apporter de l'énergie à destination de l'agent migrant en sorte de provoquer sa migration vers au moins l'une des interfaces matrice polymère/substrat pour générer une couche de faible cohésion et séparer les éléments.

Les agents migrants comme la pTSH, fondent et migrent jusqu'à l'interface puis s'y décompose pour induire le décollement interfacial.

Un tel procédé de démontage autorise la démontabilité sans dégrader l'un ou l'autre des substrats et permet de séparer les deux substrats en obtenant une surface sans résidu d'adhésif d'au moins un des substrats, éventuellement prête à être de nouveau assemblée à un nouveau substrat.

Depuis, il a été découvert qu'il était possible également d'utiliser des agents migrants qui ne fondent pas avant, mais qui, une fois activés génèrent des gaz directement dans le volume de la matrice polymère servant de joint, gaz qui migrent vers l'interface. C'est le cas notamment des compositions décrites dans la demande FR 2.929.951.

Toutefois en fonction de la composition à base de matrice polymère utilisée pour coller les substrats, les gaz générés ne migrent pas de la même façon et la concentration de gaz à l'interface joint/substrat n'est pas toujours suffisante pour permettre le décollement.

C'est pourquoi l'objectif de l'invention est de pallier ces inconvénients et de proposer une composition particulière qui permet l'assemblage de deux substrats par collage, assemblage qui soit toujours démontable par un procédé spécifique.

A cet effet l'invention vise une composition destinée à servir de joint pour coller deux substrats, décollables ensuite par chauffage localisé, constituée d'une matière polymère présentant une valeur de module d'Young en traction à 25°C entre 0,1 et 500 MPa et comprenant au moins un agent migrant apte à migrer jusqu'à au moins une des interfaces du joint pour générer un décollement interfacial.

Par « décollement interfacial », on entend la séparation de surfaces assemblées, au niveau des interfaces collées.

De même, par « chauffage localisé » au sens de l'invention on entend tout procédé de chauffage permettant de chauffer au niveau d'au moins une des interfaces du joint, en opposition à un chauffage dans la masse qui intervient sur l'ensemble du joint de colle.

L'invention couvre aussi l'assemblage démontable par chauffage localisé obtenu à l'aide de cette composition, ainsi qu'un procédé de montage et un procédé de démontage particulier de cet assemblage qui permet nécessairement de décoller les deux substrats.

L'invention est maintenant décrite en détail suivant un mode de réalisation particulier, non limitatif.

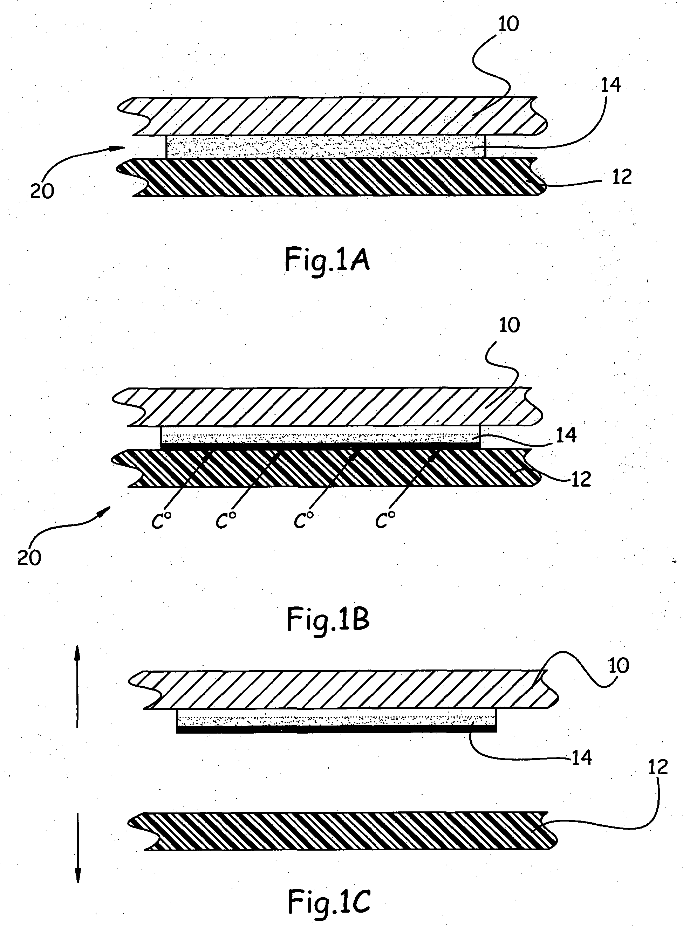

Les figures 1A à 1C représentent schématiquement un assemblage tel qu'il se présente lors de la mise en contact, lors de l'apport de chaleur localisé pour la migration et lors du démontage.

Selon un premier aspect, l'invention vise un assemblage 20 comprenant un premier substrat 10 et un second substrat 12 collés avec au moins un joint 14 comme montré sur la figure 1A. Le joint 14 est constitué de matière polymère présentant une valeur de module d'Young en traction à 25°C entre 0,1 et 500 MPa, c'est-à-dire une matière polymère souple, et comprenant au moins un agent migrant apte à migrer jusqu'à au moins une des interfaces du joint 14 pour générer un décollement interfacial sous l'action de la chaleur. L'assemblage 20 est démontable par chauffage localisé entre le joint 14 et un des substrats 10,12.

Préférentiellement il s'agit d'une matière polymère présentant une valeur de module d'Young en traction à 25°C entre 0,1 MPa et 100 MPa.

Le joint 14 peut être un adhésif de type connu à base de résine présentant une valeur de module d'Young en traction à 25°C entre 0,1 et 500 MPa comme une résine PUR (polyuréthane).

Par joint au sens de l'invention on peut également entendre un primaire d'adhésion c'est-à-dire une couche, du même type que le polymère utilisé pour l'adhésif (présentant une valeur de module d'Young en traction à 25°C entre 0,1 et 500 MPa), appliquée avant l'adhésif et dont l'épaisseur est de quelques dizaines de microns. Il peut s'agir par exemple de peintures ou de revêtements.

On considère que la présence du premier substrat 10 et du second substrat 12 avec le joint 14 définit deux interfaces, l'une entre ce joint et le premier substrat et l'autre entre ce joint et le second substrat.

Néanmoins, il est possible que l'assemblage 20 comprenne plusieurs joints, par exemple deux adhésifs différents ou un adhésif et un primaire.

Dans le cas de deux joints superposés, liés entre eux et cet ensemble étant lui-même lié aux deux substrats, il est défini une interface supplémentaire entre les deux joints.

On considère comme équivalent une interface entre deux joints ou entre un joint et un substrat.

L'un au moins des joints inclut au moins un composé apte à migrer dans la matrice du joint pour générer un décollement interfacial à l'une au moins des interfaces dudit joint avec l'un des substrats ou avec un autre joint.

Un deuxième aspect de l'invention concerne la composition destinée à servir de joint 14 pour l'assemblage 20.

Cette composition comprend :
- une base polymère présentant un module d'Young en traction à 25°C entre 0,1 et 500 MPa, et
- au moins un agent migrant.

Par « base polymère » on entend le liant ou squelette constitutif de l'adhésif.

Parmi les bases polymères particulièrement adaptées pour la présente invention on peut citer notamment les élastomères, en particulier les matrices polyuréthane (PUR), matrices silicone. Ces matrices, une fois polymérisées, sont souples.

Par « agent migrant » on entend au moins une molécule, qui une fois activée, est apte à migrer jusqu'à au moins une des interfaces du joint 14 pour générer un décollement interfacial sous l'action de la chaleur.

Préférentiellement il s'agit d'un agent qui, soumis à une certaine chaleur, se décompose et génère des gaz qui migrent vers au moins une interface pour y produire des contraintes et induire un décollement.

L' agent migrant peut être choisi parmi les agents gonf lants chimiques.

De façon préférentielle, l'agent migrant est un acide polycarboxylique ou l'azodicarbonamide.

Selon un mode de réalisation préféré l'agent migrant est présent entre 2,5 et 50% en poids de la base polymère, encore plus préférentiellement entre 2,5 et 30%. Cette proportion est particulièrement adapté au décollement des substrats souples constitués d'une matière polymère présentant une valeur de module d'Young en traction à 25°C entre 0,1MPa et 500 MPa.

Cette composition peut servir de joint 14 pour réaliser un assemblage 20 par la mise en oeuvre des étapes suivantes :
- disposer au moins ladite composition entre un premier substrat 10 et un second substrat 12,
- presser les deux substrats 10, 12 l'un contre l'autre, et
- polymériser la composition pour former un joint 14 et obtenir l'assemblage collé des deux substrats 10, 12.

L'assemblage 20 ainsi obtenu peut être démonté par la mise en oeuvre d'un procédé comprenant les étapes suivantes :
- chauffer localement à l'interface entre le joint 14 et un substrat 10, 12 à la température d'activation de l'agent migrant incorporé dans le joint 14 en sorte de générer des gaz et provoquer leur migration jusqu'à l'interface du joint 14 avec le substrat 10,12, produisant ainsi un décollement interfacial, et
- séparer les éléments au droit du décollement interfacial.

L'étape de chauffage localisé peut être réalisée par des moyens adaptés aux substrats assemblés comme par exemple avec une lampe infrarouge si un des substrat est en verre ou par induction pour le cas d'une carrosserie ou encore à l'aide d'une paroi chauffante conformée à l'un des substrats.

Sans le chauffage localisé, par exemple avec un chauffage dans la masse en étuve, les deux substrats ne peuvent pas être décollés du fait de la matière polymère souple utilisée dans la composition. En effet avec un chauffage dans la masse les gaz générés au sein du volume ne se retrouvent pas en concentration suffisante au niveau de l'interface et on ne peut pas créer un décollement interfacial.

La température pour le décollage est préférentiellement choisie entre 150 et 220°C.

Avantageusement le chauffage localisé associé au choix de la base polymère particulière selon l'invention avec une faible valeur de module d'élasticité, permet de créer des bulles en surface du joint, qui crèvent sous l'effet des gaz, ce qui a pour effet de libérer les gaz à l'interface en concentration suffisante pour permettre le décollement interfacial.

Le démontage est schématiquement représenté sur les figures 1B et 1C. Le décollement interfacial est généré sur la figure 1B par l'apport de chaleur localisé et les deux substrats sont séparés l'un de l'autre sur la figure 1C, le joint pouvant rester sur l'un des deux substrats.

L'invention peut être illustrée par un exemple non limitatif d'assemblage verre-métal collés avec un joint, polyuréthane monocomposant (adhésif) chargé à 5% d'azodicarbonamide (agent migrant inclus dans l'adhésif).

Deux types d'essais ont été menés sur cet assemblage en comparaison à un assemblage réalisé avec une colle standard (polyuréthane monocomposant non chargé).

### Essai 1 : essai en pelage

Cet essai s'inspire de la norme automobile D51 1709 (pelage d'un cordon d'adhésif collé sur un substrat en verre).

On active un demi-assemblage (sans métal pour pouvoir peler le cordon) assemblé selon l'invention et un demi-assemblage (sans métal) assemblé avec une colle standard.

L'activation des échantillons est réalisée à l'aide d'une lampe infra-rouge placée face à la surface externe du verre. Ceci permet de chauffer localement à la surface du joint de colle située du côté du verre.

Les résultats obtenus sont présentés dans le tableau suivant :

| | **Sans activation** | **Après activation thermique** |
|---|---|---|
| **Assemblage standard** | Rupture cohésive | Rupture cohésive |
| **Assemblage selon l'invention** | Rupture cohésive | Rupture adhésive (aucune adhésion sur le verre) |

### Essai 2 : essai en arrachement

Pour cet essai le joint de colle entre le verre et le métal pour l'assemblage selon l'invention et pour le collage standard, est caractérisé par :
- une épaisseur de 4 mm,
- une longueur de 50mm, et
- une largeur de 10mm.

L'activation des échantillons est réalisée à l'aide d'une lampe infra-rouge placée face à la surface externe du verre. Ceci permet de chauffer localement à la surface du joint de colle située du côté du verre.

Les résultats obtenus de mesure de la force d'arrachement en N, sont présentés dans le tableau suivant :

| | **Sans activation** | **Après activation thermique** |
|---|---|---|
| **Assemblage standard** | 1700 | 1200 |
| **Assemblage selon l'invention** | 1920 | 130 |

On constate que les échantillons assemblés avec un joint selon l'invention présentent après activation par chauffage localisé, un faciès de rupture adhésif , caractéristique de la localisation du décollement et de l'action des gaz à l'interface. Le décollement est visible lors de l'activation (apparition d'un vide entre le joint et le substrat). La valeur mesurée lors du test d'arrachement (130) correspond aux faibles tenues résiduelles du joint sur le verre.

## Revendications

1. Procédé de démontage d'un assemblage (20) comprenant un premier substrat (10) et un second substrat (12) collés avec au moins un joint (14), ledit joint (14) étant constitué de matière polymère choisie parmi les matrices polyuréthane et les matrices silicone, présentant une valeur dé module d'Young en traction à 25°C entre 0,1 et 500 MPa, et comprenant au moins un agent migrant apte à migrer jusqu'à au moins une des interfaces du joint (14) pour générer un décollement interfacial sous l'action de la chaleur, comprenant les étapes suivantes :
- chauffer localement à l'interface entre le joint (14) et un substrat (10, 12) +à la température d'activation de l'agent migrant incorporé dans le joint (14) en sorte de générer des gaz et provoquer leur migration jusqu'à l'interface du joint (14) avec le substrat (10, 12), produisant ainsi un décollement intérfacial, et
- séparer les éléments au droit du décollement interfacial.

2. Procédé selon la revendication **caractérisé en ce que** la composition destinée à servir de joint (14) pour l'assemblage (20) comprend :
- une base polymère choisie parmi les matrices polyuréthane et lès matrices silicone présentant un module d'Young en traction à 25°C entre 0,1 et 500 MPa, et
- entre 2,5 et 50% en poids de la base d'au moins un agent migrant.

3. Procédé selon l'une des revendications 1 ou 2, **caractérisé en ce que** l'agent migrant est un acide polycarboxylique.

4. Procédé selon l'une des revendications 1 à 3, **caractérisé en ce que** l'agent migrant est l'azodicarbonamide.

## Patentansprüche

1. Verfahren zum Zerlegen eines Verbundes (20) mit einem ersten Substrat (10) und einem zweiten Substrat (12), die über wenigstens eine Verbindungsschicht (14) verklebt sind, wobei die Verbindungsschicht (14) aus einem Polymermaterial besteht, das unter den Polyurethanmatrizen und den Silikonmatrizen ausgewählt ist, bei 25°C einen Wert des Youngschen Moduls zwischen 0,1 und 500 MPa aufweist und wenigstens einen Migrationsstoff umfasst, der dazu geeignet ist, bis zu wenigstens einer der Grenzflächen der Verbindungsschicht (14) zu migrieren, um eine Ablösung der Grenzfläche unter Einwirkung von Wärme zu bewirken, wobei das Verfahren die folgenden Verfahrensschritte aufweist:
- lokales Erwärmen an der Grenzfläche zwischen der Verbindungsschicht (14) und einem Substrat (10, 12) auf die Aktivierungstemperatur des Migrationsstoffes, der in die Verbindungsschicht (14) derart eingebracht ist, dass Gase erzeugt werden und ihre Migration bis an die Grenzfläche der Verbindung (14) mit dem Substrat (10, 12) bewirkt wird und auf diese Weise ein Ablösen der Grenzfläche hervorgerufen wird, und
- Trennen der Elemente im Bereich der Ablösung der Grenzflächen.

2. Verfahren nach Anspruch 1, **dadurch gekennzeichnet, dass** die Zusammensetzung, die dazu bestimmt ist als Verbindungsschicht (14) für den Verbund (20) zu dienen versehen ist mit:
- einer Polymerbasis, die unter den Polyurethanmatrizen und den Silikonmatrizen ausgewählt ist und die bei einer Temperatur von 25°C ein Youngsches Modul zwischen 0,1 und 500 MPa aufweist und
- bezüglich der Basis zwischen 2,5 und 50 Gewichtsprozent von wenigstens einem Migrationsstoff.

3. Verfahren nach einem der Ansprüche 1 oder 2, **dadurch gekennzeichnet, dass** der Migrationsstoff eine Polycarbonsäure ist.

4. Verfahren nach einem der Ansprüche 1 bis 3, **dadurch gekennzeichnet, dass** der Migrationsstoff Azodicarbonamid ist.

## Claims

1. A method for dismantling an assembly (20) comprising a first substrate (10) and a second substrate (12) bonded with at least one seal (14), said seal (14) consisting of a polymer material chosen from polyurethane matrices and silicone matrices, having a tensile Young's modulus at 25°C of between 0.1 and 500 MPa, and comprising at least one migrating agent able to migrate as far as at least one of the interfaces of the seal (14) in order to cause an interface detachment under the action of heat, comprising the following steps:
- heating locally at the interface between the seal (14) and a substrate (10, 12) at the activation temperature of the migrating agent incorporated in the seal (14) so as to generate gases and cause migration thereof as far as the interface of the seal (14) with the substrate (10, 12), thus producing an interface detachment, and
- separating the elements in line with the interface detachment.

2. A method according to claim 1, **characterised in that** the composition intended to serve as a seal (14) for the assembly (20) comprises:
- a polymer base chosen from polyurethane matrices and silicone matrices, having a tensile Young's modulus at 25°C of between 0.1 and 500 MPa, and
- between 2.5% and 50% by weight of the base of at least one migrating agent.

3. A method according to one of claims 1 or 2, **characterised in that** the migrating agent is a polycarboxylic acid.

4. A method according to one of claims 1 to 3, **characterised in that** the migrating agent is azodicarbonamide.
